# EUROPEAN PATENT APPLICATION

(11) **EP 4 009 096 A1**
(43) Date of publication of application: **08.06.2022**
(21) Application number: 20850670.9
(22) Date of filing: 05.06.2020
(51) Int. Cl.: G02B 30/10, G03B 35/24, H04N 13/302, H04N 13/361

(54) **DISPLAY DEVICE**

(30) Priority: 02.08.2019 JP 2019143220
(71) Applicant: Panasonic Intellectual Property Management Co., Ltd., Osaka-shi, Osaka 540-6207 (JP)
(72) Inventor: KASAHARA Shigeo, Chuo-ku, Osaka-shi, Osaka 540-6207 (JP); TANAHASHI Satoru, Chuo-ku, Osaka-shi, Osaka 540-6207 (JP); KAMADA Naoki, Chuo-ku, Osaka-shi, Osaka 540-6207 (JP)
(74) Representative: Eisenführ Speiser
(86) International application number: PCT/JP2020/022224
(87) International publication number: WO 2021/024600

(57) **Abstract**

A display device includes: a first display unit that displays a non-directional display image which is invariant regardless of a viewing direction of an observer; a second display unit that is disposed on a side opposite to an outer surface of the first display unit and has a plurality of pixels two-dimensionally arranged to display a display image having a different directional property in accordance with the viewing direction of the observer; an optical element array that is disposed in parallel with a light emission surface of the second display unit between the outer surface of the first display unit and the second display unit, in which a plurality of optical elements are arranged respectively corresponding to a predetermined unit of pixels among the plurality of pixels; and a driving unit that turns on a predetermined pixel among the plurality of pixels of the second display unit.

## Description

### TECHNICAL FIELD

The present disclosure relates to a display device.

### BACKGROUND ART

PTL 1 discloses a multi-functional luminance difference decorative screen including a decorative layer, an optical display element, and a control device that controls the optical display element. The decorative layer is provided in front of the optical display element and is a semi-transparent pattern. The optical display element is a light source, and is connected to a control device. As a result, behind the decorative layer, there are contents to be displayed. The decorative screen not only displays the contents behind the decorative layer, but also functions as a decoration. With such a configuration, while the structure is simple and the use is wide-ranging, there is provided a dual use of decoration and content display, and it is possible to efficiently use the space.

### Citation List

### Patent Literature

PTL 1: Japanese Utility Model (Registered) Publication No. 3124951

### SUMMARY OF THE INVENTION

An object of the present disclosure is to provide a display device capable of combining an image provided on a display surface and an image formed by a light field display and recognizably reproducing an image having a texture appropriate for an observer.

A display device according to the present disclosure includes: a first display unit that displays a non-directional display image which is invariant regardless of a viewing direction of an observer; a second display unit that is disposed on a side opposite to an outer surface of the first display unit and has a plurality of pixels two-dimensionally arranged to display a display image having a different directional property in accordance with the viewing direction of the observer; an optical element array that is disposed in parallel with a light emission surface of the second display unit between the outer surface of the first display unit and the second display unit, in which a plurality of optical elements are arranged respectively corresponding to a predetermined unit of pixels among the plurality of pixels; and a driving unit that turns on a predetermined pixel among the plurality of pixels of the second display unit.

According to the present disclosure, an image provided on a display surface and an image formed by a light field display can be combined such that an image having a texture appropriate for an observer can be reproduced to be recognized.

### BRIEF DESCRIPTION OF DRAWINGS

FIG. 1 is a plan view showing an outer surface of a display device according to a first exemplary embodiment.
FIG. 2 is a diagram schematically showing a configuration of a display unit of the display device according to the first exemplary embodiment.
FIG. 3 is a block diagram showing a configuration of a driving unit of the display device according to the first exemplary embodiment.
FIG. 4 is a diagram showing an example of an emitted luminous flux in the display device of the first exemplary embodiment.
FIG. 5 is a diagram showing texture display by the display device of the first exemplary embodiment.
FIG. 6 is a diagram showing an example of reproducing colors different depending on a direction as an example of texture display in the display device of the first exemplary embodiment.
FIG. 7 is a diagram showing an example of reproducing texture display of a stereoscopic image by the display device of the first exemplary embodiment.
FIG. 8 is a diagram schematically showing a configuration of a display unit of a display device according to a second exemplary embodiment.
FIG. 9 is a block diagram showing a configuration of a driving unit of the display device according to the second exemplary embodiment.
FIG. 10 is a block diagram showing a specific example of the configuration of the driving unit of the display device according to the second exemplary embodiment.
FIG. 11 is a diagram schematically showing a ray emitted from an optional point P in various directions.
FIG. 12 is a characteristic diagram showing luminance distribution of the ray in FIG. 11 for each direction.
FIG. 13 is a plan view showing a configuration example of a first display of the display device according to Modification Example 1 of the second exemplary embodiment.
FIG. 14 is a diagram schematically showing a configuration of disposition of the first display and a second display in Modification Example 1 of the second exemplary embodiment.
FIG. 15 is a plan view showing a configuration example of the first display of the display device according to Modification Example 2 of the second exemplary embodiment.
FIG. 16 is a diagram schematically showing a configuration of disposition of the first display and the second display in Modification Example 2 of the second exemplary embodiment.
FIG. 17 is a diagram showing an example of texture display in the display device according to Modification Example 1 of the second exemplary embodiment.
FIG. 18 is a plan view showing a configuration example of a first display of a display device according to a third exemplary embodiment.
FIG. 19 is a diagram schematically showing a configuration of disposition of the first display and a second display in the third exemplary embodiment.
FIG. 20 is a diagram showing an example of texture display in the display device of the third exemplary embodiment.

### DESCRIPTION OF EMBODIMENTS

Hereinafter, exemplary embodiments, in which the configurations according to the present disclosure are specifically disclosed, will be described in detail with reference to the drawings as appropriate. However, more detailed description than necessary may not be given. For example, detailed descriptions of already well-known matters and repeated descriptions for substantially the same configuration may not be given. This is to avoid unnecessary redundancy of the following description and to facilitate the understanding of those skilled in the art. It should be noted that the accompanying drawings and the following description are provided for those skilled in the art to fully understand the present disclosure, and are not intended to limit the subject matter described in the claims.

### (Background to Contents of Present Embodiment)

A decorative screen has been proposed in which a light source and contents are provided behind the decorative layer and decoration formed by the decorative layer and information about the contents to be displayed by light are provided. In the type of conventional decorative screen, there is a problem in that the information about the contents cannot be changed since only the fixed decoration and the contents are displayed. Further, in the case of the configuration in which the contents is displayed by the pinhole and the light source, it is difficult to display the fine content.

Further, the contents to be displayed is only displayed at the same position as the decorative surface of the decorative layer, and there is a problem in that the stereoscopic contents cannot be displayed. It is not possible to express different textures such as gloss in accordance with the viewing direction of the observer.

It is assumed that a light field display capable of reproducing a stereoscopic image is applied to a display device having a display surface such as a decorative layer. In such a case, since a resolution of the display unit of the light field display is limited, it is difficult to reproduce a high-definition image only with the light field display.

Hereinafter, a description will be given of an example of the display device which recognizably reproduces, in addition to a high-definition image on a display surface, an image having a different texture depending on an observation direction by a light field display by combining a decorative layer or the display surface formed by the display device and the light field display.

### (First Embodiment)

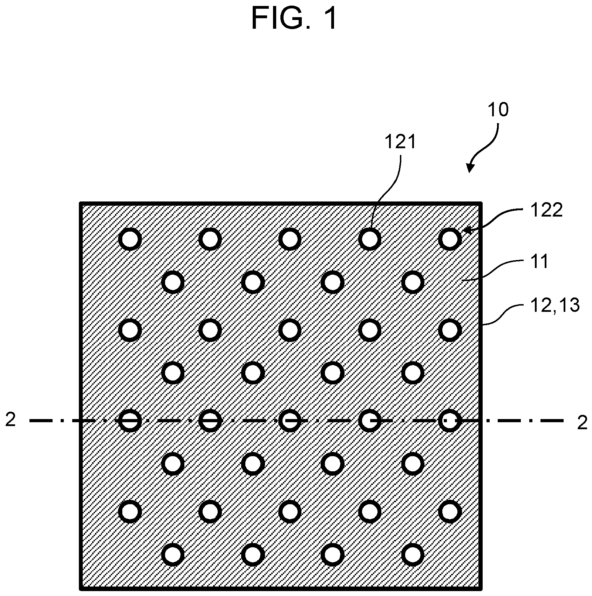

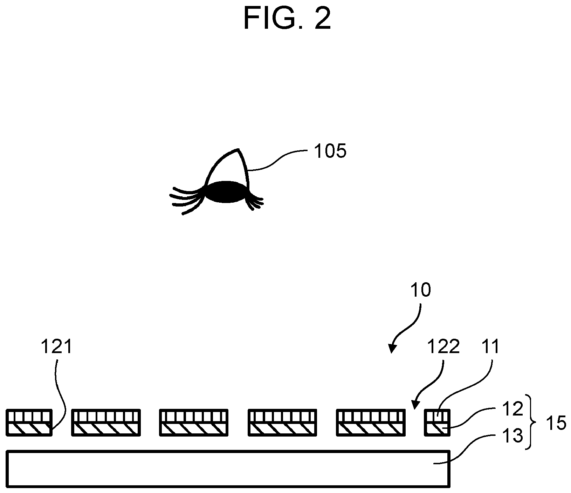

FIG. 1 is a plan view showing an outer surface of the display device according to the first exemplary embodiment. FIG. 2 is a diagram schematically showing a configuration of the display unit of the display device according to the first exemplary embodiment. FIG. 2 schematically shows a 2-2 cross section of FIG. 1, that is, a cross section of the display device in the thickness direction (emitted light direction).

Display device 10 is configured to have decorative layer 11, pinhole film 12, and display 13 in order from the outer surface side (a side from which light is emitted). Decorative layer 11 as an example of the first display unit has a non-directional display surface that is invariant regardless of the viewing direction of the observer. Decorative layer 11 is constituted of: a plate member having various decorations on the outer surface as a non-directional display surface, such as an image such as a painting or a photograph or a printed matter, decoration by unevenness, texture of cloth or the like, and plating; and a flat member such as a membrane member.

Display 13 as an example of the second display unit displays an image having a different directional property in accordance with the viewing direction of the observer. Display 13 is constituted of a self-emission display device such as an organic electroluminescence (EL) display, an inorganic EL display, a light emission diode (LED) display, a plasma display, or a cathode ray tube. In display 13, a plurality of pixels are two-dimensionally arranged vertically and horizontally on the display surface (light emission surface, upper surface of FIG. 2) on decorative layer 11 side, and each pixel in the matrix shape is turned on and off to display an image. Display 13 may be constituted of a liquid crystal display (LCD) in which a self-emission display device is formed by a liquid crystal display panel and a backlight.

In the present exemplary embodiment, pinhole film 12 as an example of an optical element array is provided on a surface (lower surface of FIG. 2) of decorative layer 11 on display 13 side. The optical element array is disposed between an outer surface of decorative layer 11 and display 13 in parallel with a light emission surface of display 13. In the optical element array, one optical element corresponds to a pixel of a predetermined unit of pixels of display 13, and a plurality of optical elements are two-dimensionally arranged at predetermined intervals.

Pinhole film 12 has pinhole array 122 in which pinholes 121 are disposed and formed as a plurality of optical elements in two dimensions in the vertical and horizontal directions at the predetermined intervals on the film surface. As shown in FIG. 1, pinhole 121 is formed to penetrate the outer surface of decorative layer 11, and decorative layer 11 also has pinhole array 122. Pinhole film 12 transmits only emitted light that passes through each pinhole 121 of pinhole array 122 in the light emitted from display 13, and is emitted to the outside of decorative layer 11. Pinhole array 122 is provided with one pinhole 121 corresponding to a plurality of pixels for each predetermined unit of pixels of display 13. Light field display 15 is constituted of display 13 and pinhole film 12.

In display device 10 of the present exemplary embodiment, an image formed by light field display 15 is reproduced in the space on the front side (observer side) of decorative layer 11 as viewed from viewpoint 105 of the observer, and an image formed by ray of which the luminance, wavelength, and the like are different in accordance with the viewing direction can be represented. Therefore, an observer is able to visually recognize an image having the texture in addition to the image of the decoration.

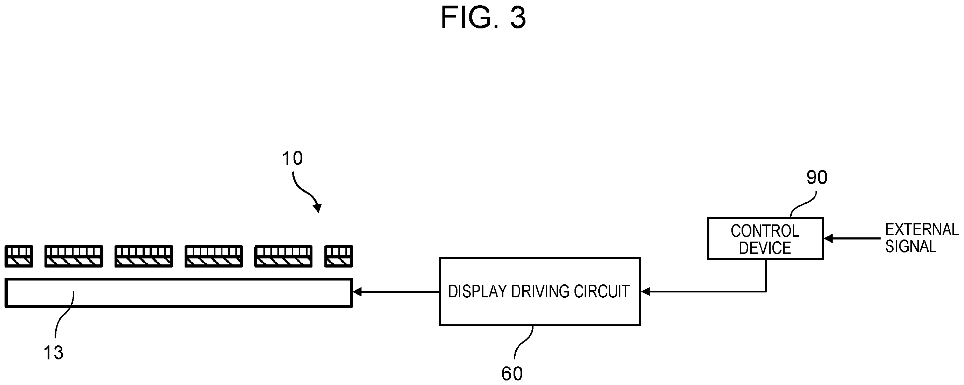

FIG. 3 is a block diagram showing a configuration of a driving unit of the display device according to the first exemplary embodiment.

As an example of the driving unit, display driving circuit 60 is connected to display 13 of display device 10, and display driving circuit 60 is connected to control device 90. Control device 90 performs driving control of display driving circuit 60 on the basis of an external signal sent from the outside or a display control signal which is output by control device 90 itself. Display driving circuit 60 supplies a driving signal to display 13 on the basis of the display control signal sent from control device 90. Display 13 controls a display mode of the display such as display/non-display of an image, turning on/off of each pixel, and a turning-on mode in accordance with the driving signal sent from display driving circuit 60.

Next, an operation of light field display 15 in display device 10 of the first exemplary embodiment, that is, display of the image formed by the light field display will be described.

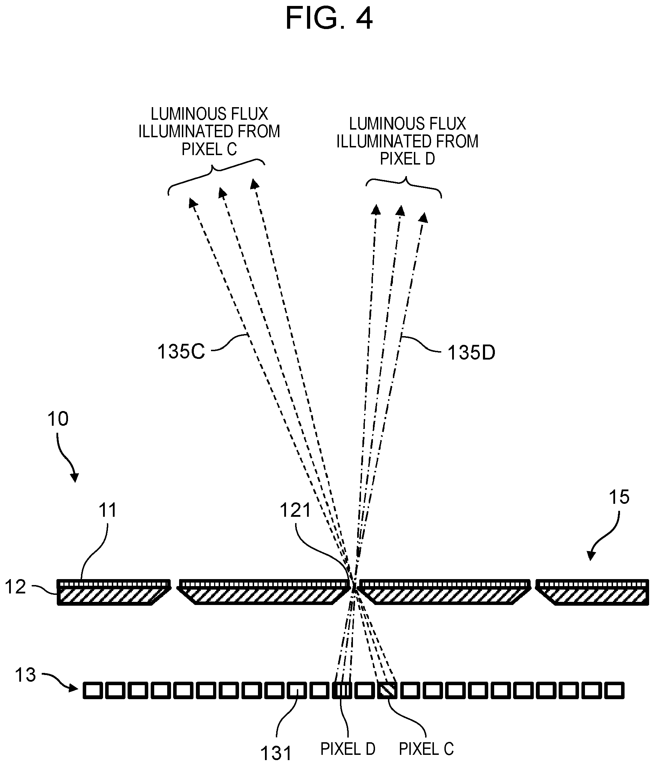

FIG. 4 is a diagram showing an example of an emitted luminous flux in the display device of the first exemplary embodiment. FIG. 4 describes a direction of the emitted luminous flux due to turning on of the pixel at a predetermined position.

In display device 10, the plurality of pixels 131 of display 13 and pinhole 121 of pinhole film 12 are disposed at a predetermined distance. In a case where optional pixel 131 is turned on, a luminous flux that diffuses slightly in accordance with a width of the pixel and a width of the pinhole is emitted to decorative layer 11 side, becomes a luminous flux toward a predetermined direction, and is illuminated onto the space on the observer side.

At this time, in FIG. 4, luminous flux 135C illuminated from pixel C passes through the pinhole and is emitted in the diagonally upward direction to the left in FIG. 4, and luminous flux 135D illuminated from pixel D passes through the pinhole and is emitted diagonally upward to the right in FIG. 4. In such a manner, since the direction of the emitted luminous flux is determined by a positional relationship between the pixels and the pinholes, the direction of the emitted luminous flux can be controlled by turning on the pixel at a predetermined position. Although the arrangement of pixels 131 of display 13 is shown in one dimension in FIG. 4, pixels 131 are similarly arranged in the direction perpendicular to the page of the drawing, and pixels 131 are two-dimensionally arranged. Therefore, light field display 15 using display 13 and pinhole film 12 is able to perform irradiation by controlling the emission direction of the luminous flux in any direction from the surface of pinhole film 12 in all directions of the hemisphere.

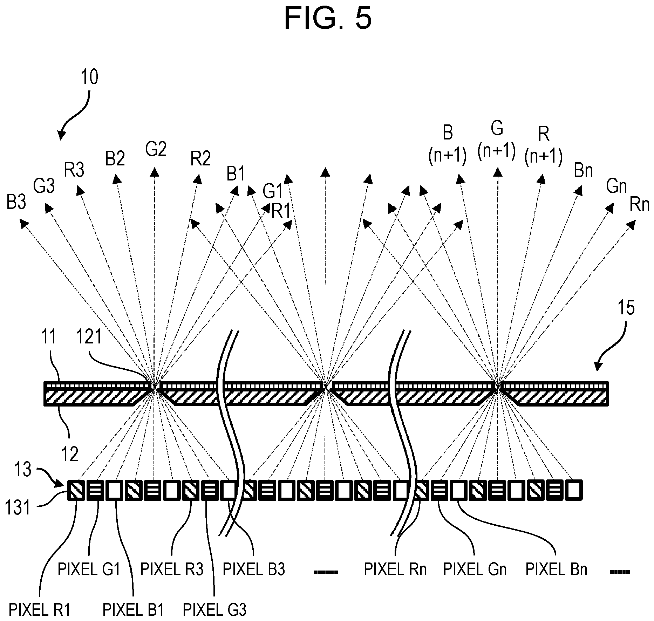

FIG. 5 is a diagram showing texture display by the display device of the first exemplary embodiment.

In the plurality of pixels 131 of display 13, the emission direction of the luminous flux, which passes through pinhole 121, is different depending on the position of the turned-on pixel. In the plurality of pixels 131, RGB pixels are arranged in order of, for example, pixels R1, G1, B1, ... Rn, Gn, Bn, .... As shown in FIG. 5, for example, in a case where pixel R1 that emits red R light, pixel G1 that emits green G light, and pixel B1 that emits blue B light are turned on, emitted luminous fluxes R1, G1, and B1 pass through pinhole 121 and are emitted diagonally upward to the right in FIG. 5. Further, in a case where pixels R3, pixels G3, and the pixels B3 are turned on, emitted luminous fluxes R3, G3, and B3 pass through pinhole 121 and are emitted in the diagonally upward direction to the left in FIG. 5. Therefore, for example, in a case where pixel R1 is turned on for red R and pixel B3 is turned on for blue B, as the observer views from the right direction of FIG. 5, a strong red light is observed, and a strong blue light is observed as viewed from the left direction of FIG. 5. The above-mentioned description is the same for other pixels. Further, in a case where a luminance of the pixel to be turned on is different depending on the pixel position, the luminance of the luminous flux changes depending on the emission direction. For example, in a case where the luminance of pixel R1 is high and the luminance of pixel R3 is low, a bright red color is observed by an observer as viewed from the right direction of FIG. 5, and a dark red color is observed as viewed from the left direction of FIG. 5.

By controlling the positions and luminances of the pixels to be turned on for each RGB pixel on the basis of the characteristics of such a display device, it is possible to display an image with a different color and a different luminance in accordance with the viewing direction of the observer and reproduce the texture.

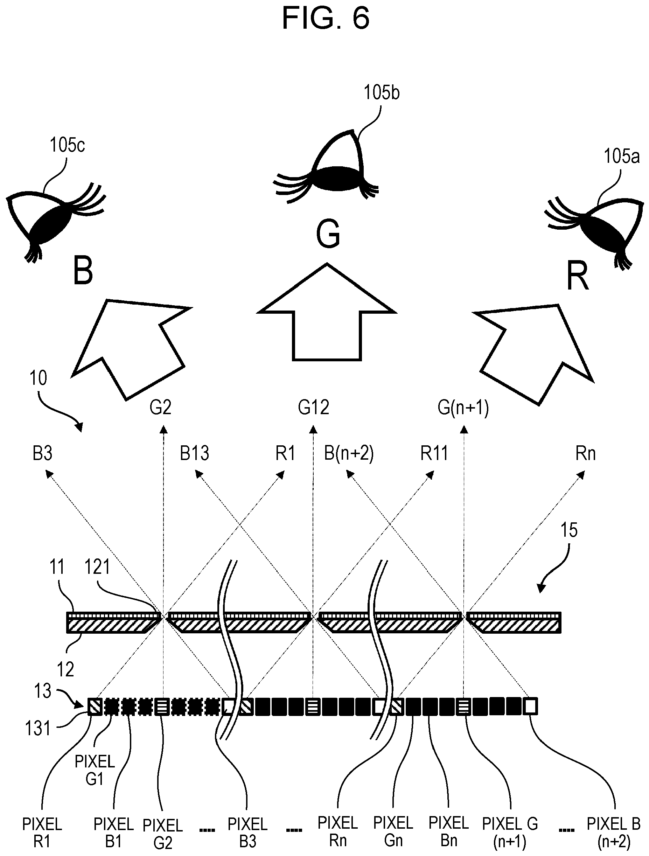

FIG. 6 is a diagram showing an example of reproducing colors different depending on a direction as an example of texture display in the display device of the first exemplary embodiment.

As shown in FIG. 6, for example, pixels R1, ... Rn are turned on for red R, pixels G2, ... G(n+1) are turned on for green G, and pixels B3, ... B(n+2) are turned on for blue B. In the drawing, hatched or white pixels represent turned-on pixels, and black pixels represent turned-off pixels (non-turned-on pixels). In such a case, red emitted luminous flux R1, ... Rn is emitted diagonally upward to the right in FIG. 6, green emitted luminous flux G2, ... G(n+1) is emitted upward in FIG. 6, and blue emitted luminous flux B3, ... B(n+2) is emitted diagonally upward to the left in FIG. 6. Therefore, reddish light is observed as viewed from a direction of observer's viewpoint 105a, greenish light is observed as viewed from a direction of observer's viewpoint 105b, and a bluish light is observed as viewed from a direction of observer's viewpoint 105c. Thereby, an image, which has a texture such as color gloss that changes in accordance with the viewing direction of the observer, is reproduced. Examples of reproduction of the texture display include a light state of the gloss of the surface of a member such as metal or velvet, a pattern on a woven fabric such as cloth, wallpaper, a painting such as an oil painting, or a printed matter, a state of reflected light on a surface of an image, and the like. It is also possible to reproduce an image reflected on a surface of a target object.

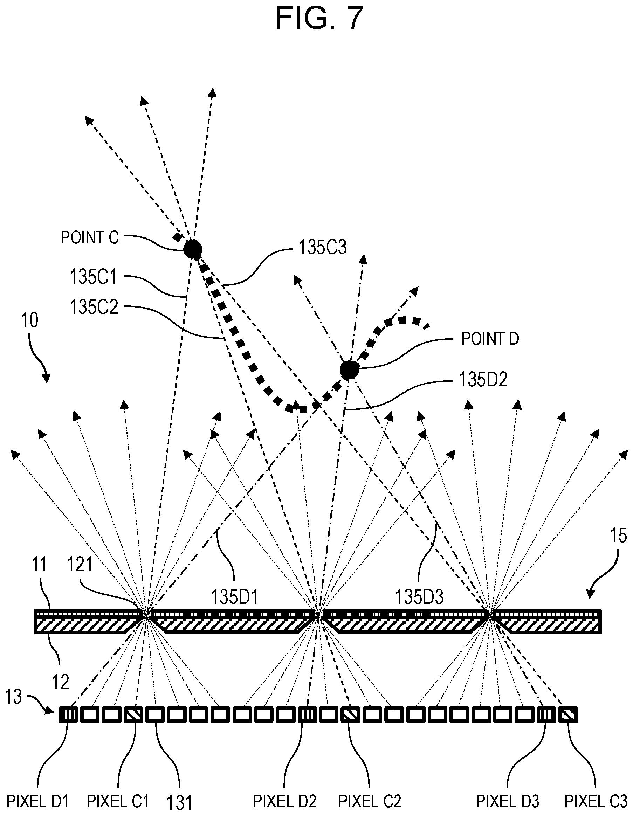

FIG. 7 is a diagram showing an example of reproducing texture display of a stereoscopic image by the display device of the first exemplary embodiment. FIG. 7 describes reproduction of the stereoscopic image by turning on pixels at a plurality of positions.

In display device 10, by turning on a plurality of pixels at predetermined positions, an image is reproduced at an intersection of a plurality of emitted luminous fluxes. In FIG. 7, luminous fluxes 135C1, 135C2, and 135C3 illuminated in a predetermined direction from the plurality of pixels C1, C2, and C3 through the pinholes, respectively, intersect at intersection C, and an image of the light emitted from intersection C is formed. Further, luminous fluxes 135D1, 135D2, and 135D3 illuminated in a predetermined direction from the plurality of pixels D1, D2, and D3 through the pinholes, respectively, intersect at intersection D, and an image of the light emitted from intersection D is formed. In such a manner, by turning on a plurality of pixels at predetermined positions and turning off the other pixels, it is possible to reproduce a stereoscopic image having a depth depending on the pixel positions to be turned on. Since pixels 131 are two-dimensionally arranged as in the example of FIG. 4, light field display 15 using display 13 and pinhole film 12 is able to reproduce a stereoscopic video at an optional position in all directions of the hemisphere from the surface of pinhole film 12. Examples of reproduction of the texture display based on a stereoscopic image include a pattern on a woven fabric such as cloth, a wallpaper, a painting such as an oil painting, or a printed matter, an unevenness on a surface of an image, and the like. It is also possible to reproduce both the effect of the texture of the ray of which the color and luminance change in accordance with the viewing direction of the observer and the effect of the texture of surface irregularities due to the stereoscopic image.

For example, it is assumed that an image having a texture of a certain object is reproduced by light field display 15. A ray emitted from an object to be reproduced (specifically, a vector wave transmitted through the object or a vector wave reflected by the object) is detected by a sensor such as a camera and stored as image data. Then, the stored ray is traced in the direction opposite to that of the sensor, and the luminance distribution and the wavelength distribution in a case where the luminous flux is incident on the display surface through pinhole array 122 in the direction from the object toward display 13 are calculated. The turning on/off of each pixel in display 13 is determined on the basis of the luminance distribution and the wavelength distribution, and the display data of the original image for reproducing the display image is generated and stored. In a case of reproducing the display image, a driving signal is supplied from display driving circuit 60 on the basis of the display data of the original image, and the pixels at the predetermined positions of display 13 are turned on. Thereby, the ray emitted from display 13 through pinhole array 122 in a predetermined direction is reproduced and is viewed by an observer as an image having a texture of the target object.

In the present exemplary embodiment, a size of one pixel of display 13 is smaller than an interval between the plurality of pinholes 121 of pinhole array 122. Thereby, it is possible to control the orientation of the emitted ray of the display by the position of the pixel to be turned on, and to reproduce a display image in which at least one of the wavelength and the luminance of the light is different in accordance with the viewing direction of the observer. A resolution of the light field display is determined by the intervals of optical elements such as pinholes in an optical element array or an outer diameter of an optical element such as a lens, and it is difficult to reproduce a high-resolution image only on the light field display. However, by combining the high-resolution image of the decorative layer and the display image of the light field display, the resolution of the light field display can be supplemented, and a high-resolution and textured image can be reproduced.

In the present exemplary embodiment, a decorative surface and a display using a decorative layer and a light field display using a pinhole film are superimposed and disposed so as to overlap each other to form a display device. Thereby, the image decorated by the decorative layer and the display image expressing the texture of the light field display can be superimposed and projected, and in addition to the high-definition image on the display surface of the decorative layer, images with different textures can be recognized and reproduced depending on the observation direction of the light field display. In addition, it is possible to reproduce an image in which information is displayed by the light field display on the front surface of the decorative layer. Therefore, it is possible to reproduce an image of a highly realistic target object having a fine texture such that the observer is able to visually recognize the image.

### (Second Embodiment)

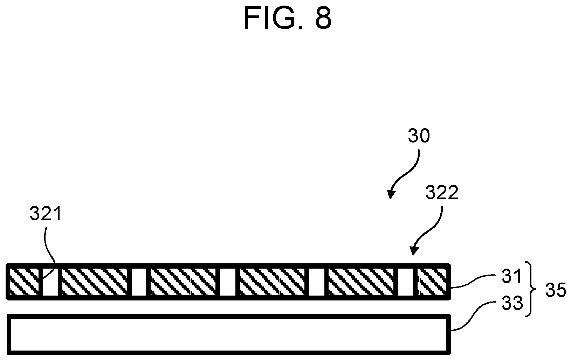

FIG. 8 is a diagram schematically showing a configuration of a display unit of a display device according to a second exemplary embodiment. FIG. 8 schematically shows a cross section of the display device in the thickness direction (emitted light direction). The second exemplary embodiment is an example in which a display is provided instead of the decorative layer of the first exemplary embodiment as a first display unit on an outer surface side of the display device. Here, the components different from the components of the first exemplary embodiment will be mainly described, and repeated description will not be given.

Display device 30 is configured to have first display 31 and second display 33 in order from an outer surface side (a side from which light is emitted). First display 31 as an example of the first display unit is constituted of a self-emission display device such as an organic EL display, a reflective display device such as electronic paper, or the like. In first display 31, a plurality of pixels are two-dimensionally arranged in vertically and horizontally on the display surface (light emission surface, upper surface of FIG. 8) on the outer front side, and each pixel in a matrix shape is displayed or not displayed to display an image.

In a similar manner to the first exemplary embodiment, second display 33 as an example of the second display unit is constituted of a self-emission display device such as an organic EL display, an inorganic EL display, an LED display, a plasma display, a cathode ray tube, or a liquid crystal display panel in which a self-emission display device is formed by a display panel and a backlight.

In the present exemplary embodiment, first display 31 has pinhole array 322 as an example of the optical element array. First display 31 has a translucent portion that transmits light from the rear side to the outer surface of the front surface side of the display surface, and pinholes 321 using the translucent portion are disposed and formed in two dimensions vertically and horizontally at predetermined intervals. Thus, pinhole array 322 having the plurality of pinholes 321 is formed. First display 31 transmits only the emitted light passing through each pinhole 321 of pinhole array 322 in the emitted light from second display 33, and emits the emitted light to the outside of first display 31. In pinhole array 322, one pinhole 321 is provided corresponding to a plurality of pixels for each predetermined unit of pixels of second display 33. Light field display 35 is constituted of second display 33 and pinhole array 322 of first display 31.

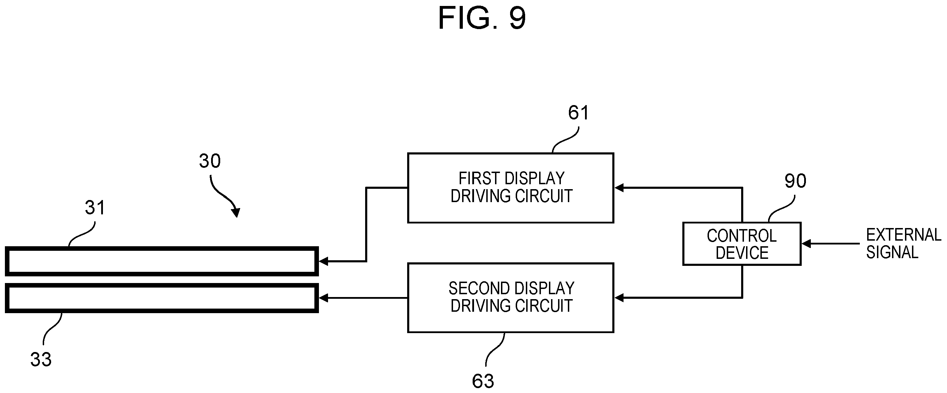

FIG. 9 is a block diagram showing a configuration of a driving unit of the display device according to the second exemplary embodiment.

First display driving circuit 61 is connected to first display 31 of display device 30 as an example of a driving unit, second display driving circuit 63 is connected to second display 33, and first display driving circuit 61 and second display driving circuit 63 are connected to control device 90. Control device 90 performs driving control of first display driving circuit 61 and second display driving circuit 63 on the basis of an external signal sent from the outside or a display control signal which is output by control device 90 itself. First display driving circuit 61 supplies a driving signal to first display 31 on the basis of the display control signal sent from control device 90. Second display driving circuit 63 supplies a driving signal to second display 33 on the basis of the display control signal sent from control device 90.

First display 31 controls the display mode of the display, for example, display/non-display of an image, switching of a display image, and the like by a driving signal sent from first display driving circuit 61. Second display 33 controls a display mode of the display, such as display/non-display of an image, turning on/off of each pixel, and turning-on mode, by a driving signal sent from second display driving circuit 63. Here, first display 31 displays an image that is invariant in accordance with the viewing direction from the viewpoint of the observer, that is, an image independent of the orientation of the observer on the display surface. On the other hand, second display 33 displays an image that is different in accordance with the viewing direction from the viewpoint of the observer, that is, an image dependent on the orientation of the observer.

In display device 30 of the present exemplary embodiment, a common image independent of the orientation is displayed on first display 31 as viewed from an observer, and an image dependent on the orientation using light field display 35 through second display 33 is reproduced in the space on the front side (observer side) of first display 31. Thereby, it is possible to express an image based on a ray having different luminance, wavelength, and the like in accordance with the viewing direction together with an optional display image. Therefore, the observer is able to visually recognize an image having a texture in addition to the optional display image.

Here, a description will be given of an example of a display method of a non-directional image independent of the orientation of the observer and a directional image dependent on the orientation, which are displayed using two displays.

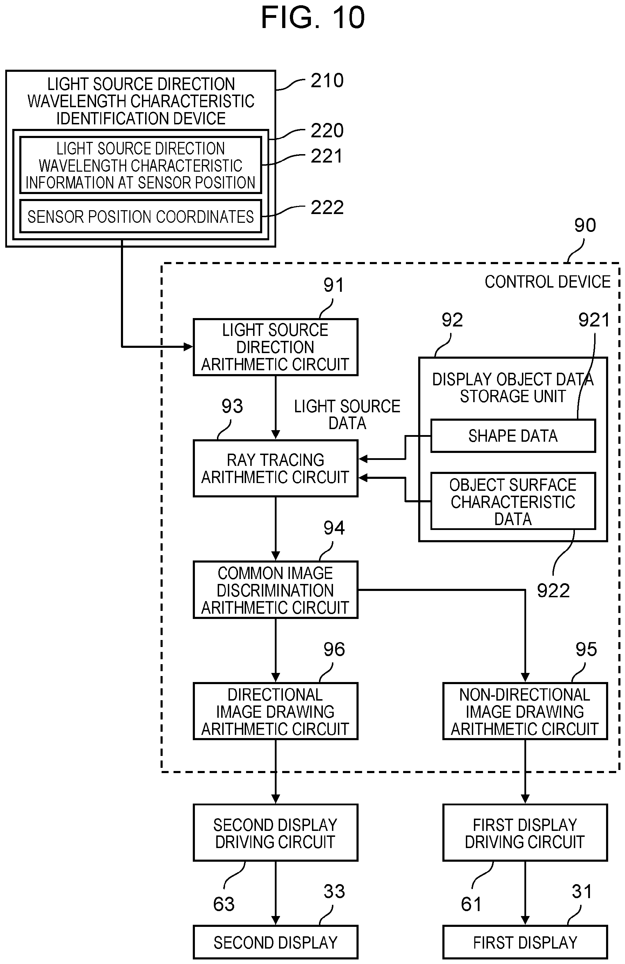

FIG. 10 is a block diagram showing a specific example of a configuration of the driving unit of the display device according to the second exemplary embodiment. Light source direction wavelength characteristic identification device 210, which detects the direction and wavelength characteristics of the light source, is connected to control device 90.

Light source direction wavelength characteristic identification device 210 is configured to have a photodetector such as a camera, an optical sensor, and an image sensor, and detects a light source that illuminates a target object reproduced by display device 30 with light. Light source direction wavelength characteristic identification device 210 is constituted of, for example, one or a plurality of 360-degree cameras, extracts a high-luminance portion from images in each direction obtained by the 360-degree cameras by image processing, and calculates an orientation of the light source. Light source direction wavelength characteristic identification device 210 acquires, as light source information, information about the direction and wavelength characteristics of the light source at the sensor position of the identification device (light source direction wavelength characteristic information 221) and position information of the sensor of the identification device (sensor position coordinates 222), and stores the information in storage unit 220.

Control device 90 has light source direction arithmetic circuit 91, display object data storage unit 92, ray tracing arithmetic circuit 93, common image discrimination arithmetic circuit 94, non-directional image drawing arithmetic circuit 95, and directional image drawing arithmetic circuit 96. Control device 90 inputs light source information obtained from light source direction wavelength characteristic identification device 210. Light source direction arithmetic circuit 91 calculates the direction and wavelength characteristics of the light source at the display position on the basis of light source direction wavelength characteristic information 221 at the sensor position and sensor position coordinates 222, and outputs the calculation result as the light source data at the display position.

Display object data storage unit 92 stores shape data 921 of the display object to be reproduced and object surface characteristic data 922 such as the reflection characteristic of the display object as the display object data. Ray tracing arithmetic circuit 93 inputs the display object data from display object data storage unit 92 and the light source data at the display position from light source direction arithmetic circuit 91. Ray tracing arithmetic circuit 93 performs rendering processing by the ray tracing method on the basis of shape data 921 of the display object, object surface characteristic data 922, and the direction and wavelength characteristic information of the light source at the display position. Ray tracing arithmetic circuit 93 calculates ray characteristic data such as luminance and chromaticity of light in each direction for the display object illuminated by the light source by the ray tracing method.

Common image discrimination arithmetic circuit 94 discriminates non-directional ray characteristic data independent of the orientation and directional ray characteristic data dependent on the orientation, on the basis of the calculated ray characteristic data such as luminance and chromaticity of light in each direction. That is, common image discrimination arithmetic circuit 94 separates directional components with respect to ray characteristics such as the luminance and chromaticity of the detected light. Non-directional image drawing arithmetic circuit 95 calculates a first display control signal for drawing the display image independent of the orientation of the display object to be reproduced from the discriminated non-directional ray characteristic data. Directional image drawing arithmetic circuit 96 calculates a second display control signal for drawing the display image dependent on the orientation of the display object to be reproduced from the discriminated directional ray characteristic data.

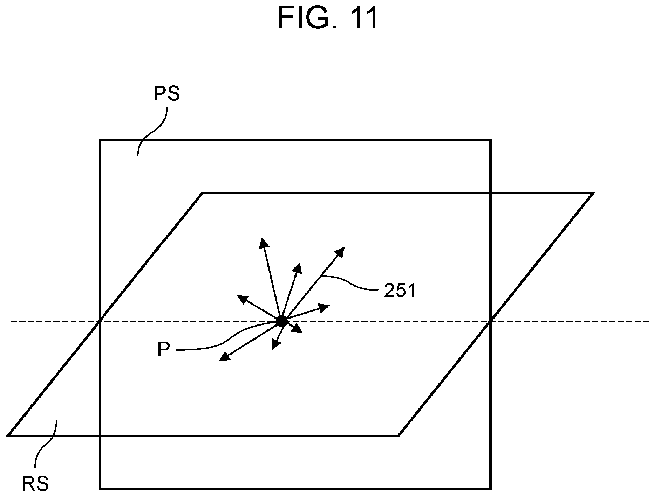

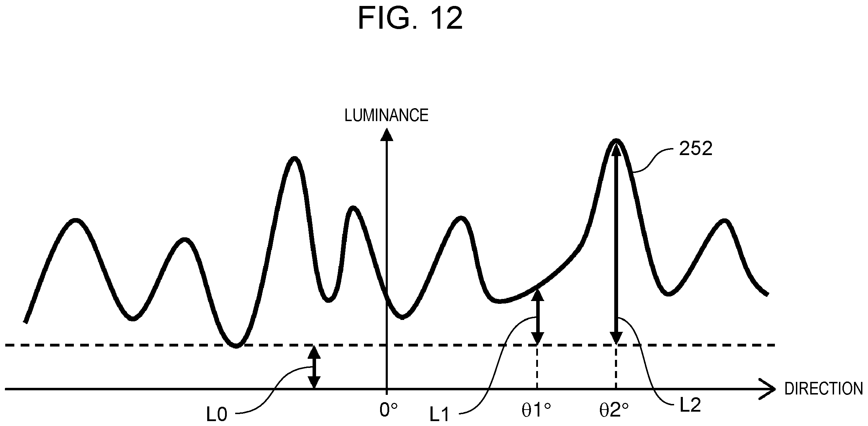

FIGS. 11 and 12 are diagrams showing an example of arithmetic processing for discriminating between non-directional ray characteristic data independent of the orientation and directional ray characteristic data dependent on the orientation. FIG. 11 is a diagram schematically showing a ray emitted from an optional point P in various directions, and shows angular distribution of the luminance in a plane direction (360° allaround direction on a plane) of a predetermined plane PS as an example of the luminance distribution in each direction from point P. FIG. 12 is a characteristic diagram showing the luminance distribution of the ray in FIG. 11 for each direction. In FIG. 12, reference plane RS corresponds to, for example, a display surface of the display, and plane PS is a plane that intersects reference plane RS perpendicularly.

As shown in FIG. 11, ray 251 emitted from predetermined point P in the display object is emitted in various directions and has a luminance distribution according to the direction. Common image discrimination arithmetic circuit 94 calculates the luminance distribution for each direction in plane PS perpendicular to reference plane RS on the basis of the ray characteristic data having the luminance and chromaticity information of the light in each direction. Here, as shown in FIG. 12, it is assumed that luminance distribution 252 for each direction at each angle such as θ1°, θ2°, ..., and the like is calculated. A minimum luminance value of the rays in all directions is defined as luminance LO independent of the orientation, and a value obtained by subtracting luminance LO independent of the orientation from the luminance in each direction is defined as the luminance dependent on the orientation. In the example shown in the drawing, the luminance dependent on the orientation in each direction, such as luminance L1 in θ1° direction or luminance L2 in θ2° direction, is obtained. As in the luminance, it is possible to calculate the chromaticity independent of the orientation and the chromaticity dependent on the orientation in each direction.

First display driving circuit 61 generates a driving signal for first display 31 on the basis of the first display control signal for drawing a display image independent of the orientation from non-directional image drawing arithmetic circuit 95. Second display driving circuit 63 generates a driving signal for second display 33 on the basis of the second display control signal for drawing a display image dependent on the orientation from directional image drawing arithmetic circuit 96. First display 31 displays a display image of a display object independent of the orientation by a driving signal sent from first display driving circuit 61. Second display 33 displays a display image dependent on the orientation by a driving signal sent from second display driving circuit 63, and reproduces the texture of the displayed object.

Light source direction wavelength characteristic identification device 210 is also able to detect light from a light source of which the position moves depending on various conditions such as the passage of time. In such a case, on the basis of the detected ray characteristic data, by using a display image dependent on the orientation formed on second display 33, for example, it is possible to reproduce an image of an object illuminated in a case where the position of the light source and the light characteristic change with the passage of time. The height and direction of sunlight differ depending on the time and season. Therefore, the light field display reproduces gloss, shadows, colors, and the like using ray characteristic data according to such changes in the light source, thereby being able to reproduce images such as objects and paintings that imitate the actual environment. The same applies in a case where the ambient illumination light changes. Further, in a case where the image of the display surface by first display 31 is changed, the chromaticity and luminance of the image depending on the observation direction by second display 33 are changed in accordance with the change of the non-directional display image. As a result, it is possible to reproduce the texture according to the image change of the display surface.

Next, a specific example of the configuration of the display device according to the Modification Examples 1 and 2 of the second exemplary embodiment will be described.

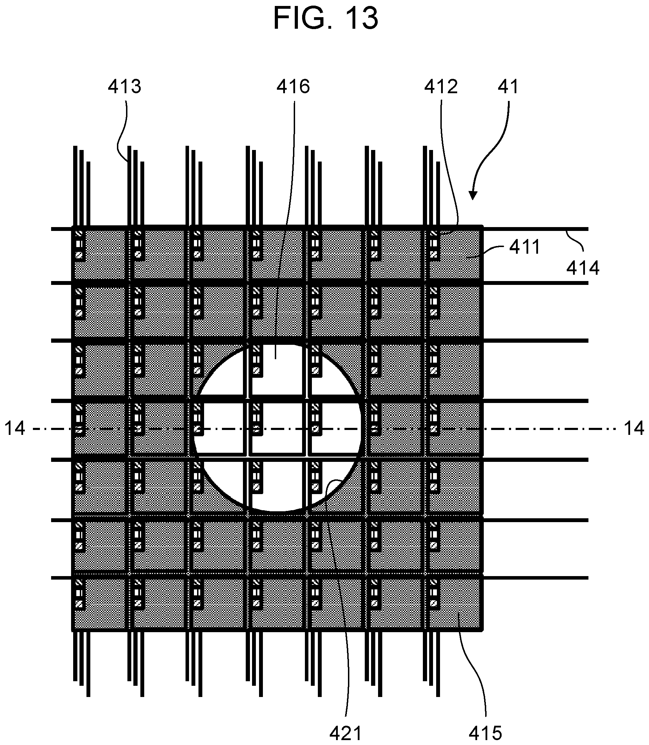

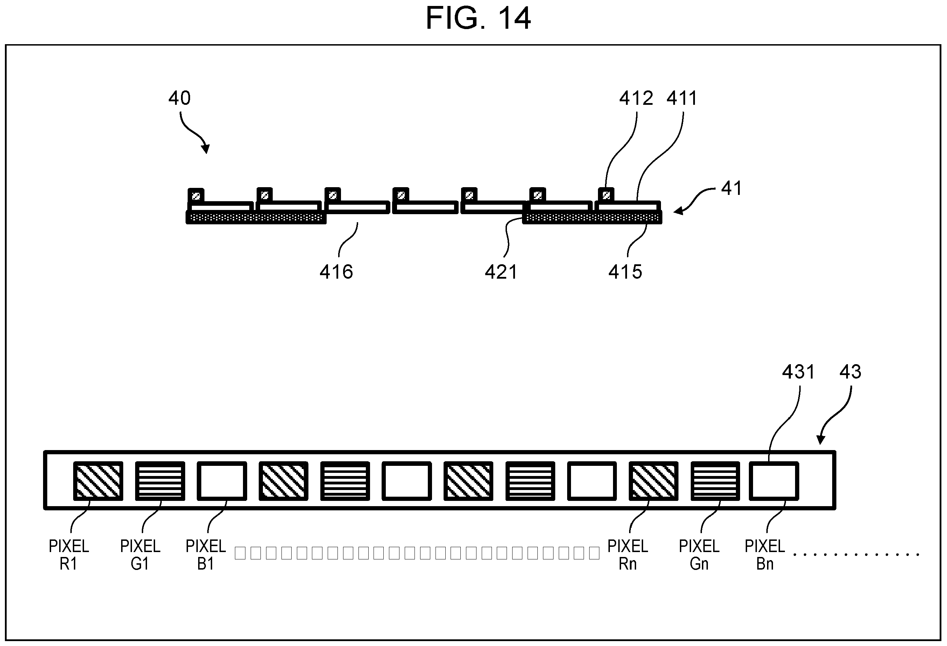

FIG. 13 is a plan view showing a configuration example of a first display of the display device according to Modification Example 1 of the second exemplary embodiment. FIG. 14 is a diagram schematically showing a configuration of disposition of the first display and the second display in Modification Example 1 of the second exemplary embodiment. In first display 41 shown in FIG. 14, the 14-14 cross section of FIG. 13, that is, the cross section of display device 40 in the thickness direction (emitted light direction) is schematically shown. Here, as Configuration Example 1 of the first display, an example using a self-emission display device is shown.

First display 41 (an example of the first display unit) is constituted of a self-emission display device such as an organic EL display, an inorganic EL display, an LED display, a plasma display, and a cathode ray tube. First display 41 has RGB light emitting element portion 412 in each pixel 411. Light emitting element portion 412 is connected to driving electrodes 413 and 414 provided in the vertical and horizontal two-dimensional pixel arrangement directions, and light emitting element portion 412 of each pixel is driven and turned on in accordance with the driving signal. In first display 41, light blocking portion 415 that blocks light is provided on the surface (lower surface of FIG. 14) of each pixel 411 on second display 43 side. Further, circular or polygonal translucent portion 416 is provided for each predetermined unit of pixels among the plurality of pixels 411, and pinholes 421 by translucent portions 416 are disposed and formed in two dimensions vertically and horizontally at predetermined intervals, thereby constituting the pinhole array (an example of the optical element array).

In second display 43 (an example of the second display unit), a plurality of pixels 431 are disposed in two dimensions vertically and horizontally. In the plurality of pixels 431, RGB pixels are arranged in order, for example, pixels R1, G1, B1, ... Rn, Gn, Bn, .... The pinhole array formed by pinholes 421 formed in first display 41 and second display 43 constitute a light field display. The display of the image formed by the light field display is the same as that of the first exemplary embodiment. A microlens array may be provided as the optical element array. A configuration of Modification Example 2 in which the microlens array is provided between the first display and the second display is shown below.

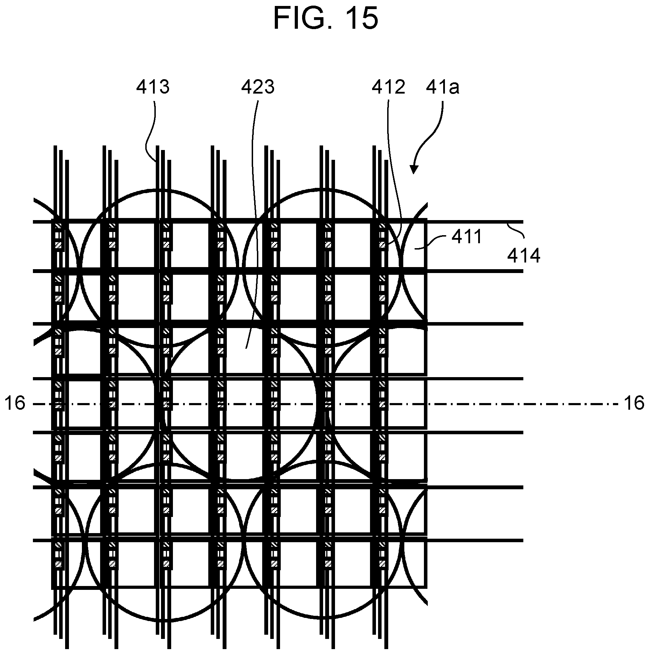

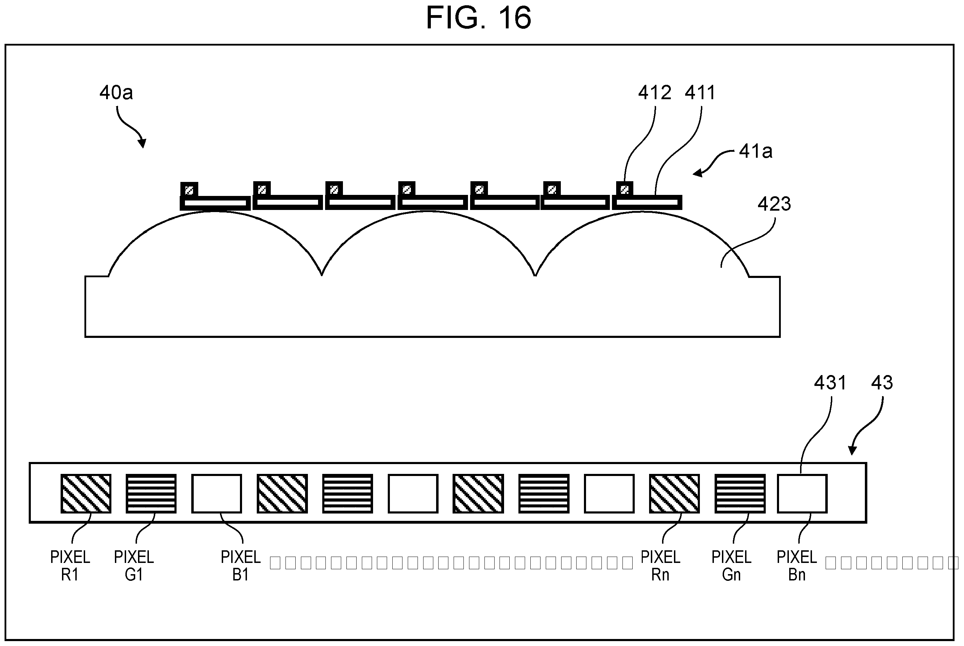

FIG. 15 is a plan view showing a configuration example of a first display of the display device according to Modification Example 2 of the second exemplary embodiment. FIG. 16 is a diagram schematically showing a configuration of disposition of the first display and the second display in Modification Example 2 of the second exemplary embodiment. In first display 41a shown in FIG. 16, a 16-16 cross section of FIG. 15, that is, the cross section of display device 40a in the thickness direction (emitted light direction) is schematically shown. Display device 40a of Modification Example 2 shown in FIG. 15 is configured such that light blocking portion 415 and pinhole 421 disposed on a surface (lower surface of FIG. 14) of first display 41 on second display 43 side in display device 40 of Modification Example 1 are removed. First display 41a (an example of the first display unit) is configured by using a member of which the entire surface is transparent or translucent except for light emitting element portion 412 and the driving electrodes 413 and 414. Display device 40a has a structure in which microlens array 423 having a plurality of microlenses arranged at a constant pitch (interval) is provided between first display 41a and second display 43. Light field display 15 is constituted of second display 43 and microlens array 423. Even in the configuration of Modification Example 2 shown in FIGS. 15 and 16, the same effect as the configuration of Modification Example 1 shown in FIGS. 13 and 14 can be obtained.

Next, an operation of the light field display in display device 40 according to Modification Example 1 of the second exemplary embodiment, that is, the display of an image formed by the light field display will be described.

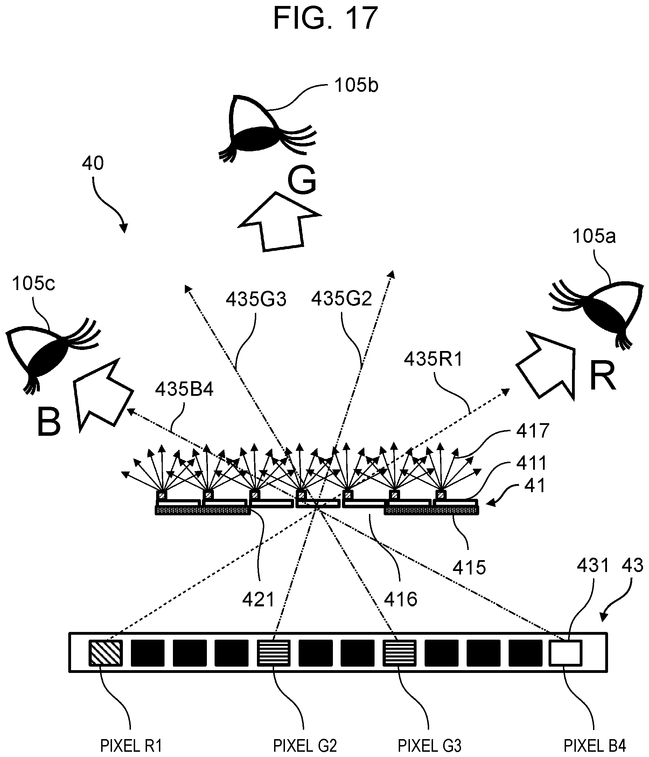

FIG. 17 is a diagram showing an example of texture display in the display device according to Modification Example 1 of the second exemplary embodiment.

In a case where the plurality of pixels 411 of first display 41 are turned on, emitted light 417 is emitted from each pixel 411. Further, in the plurality of pixels 431 of second display 43, the emission direction of the luminous flux passing through pinhole 421 is different depending on the position of the turned-on pixel, and the emitted light is emitted in a different direction according to the pixel position.

As shown in FIG. 17, for example, pixel R1 is turned on for red R, pixels G2 and G3 are turned on for green G, and pixel B4 is turned on for blue B. In FIG. 17, hatched or white pixels represent turned-on pixels, and black pixels represent turned-off pixels (non-turned-on pixels). In such a case, emitted luminous flux 435R1 of red pixel R1 passes through pinhole 421 and is emitted in the diagonally upward to the right in FIG. 17. Emitted luminous flux 435G2 of green pixel G2 passes through pinhole 421 and is emitted to the upward right side of FIG. 17, and emitted luminous flux 435G3 of pixel G3 passes through pinhole 421 and is emitted to the upward left side of FIG. 17. Further, emitted luminous flux 435B4 of blue pixel B4 passes through pinhole 421 and is emitted in the diagonally upward direction to the left in FIG. 17.

Therefore, reddish light is observed as viewed from a direction of observer's viewpoint 105a, greenish light is observed as viewed from a direction of observer's viewpoint 105b, and a bluish light is observed as viewed from a direction of observer's viewpoint 105c. In such a case, light of a different color appears to be superimposed on the image displayed by first display 41 depending on the orientation emitted by second display 43. Thereby, an image, which has a texture such as color gloss that changes in accordance with the viewing direction of the observer, is reproduced. Further, in a case where a luminance of the pixel to be turned on is different depending on the pixel position, the luminance of the luminous flux changes depending on the emission direction. In such a manner, by controlling the positions and luminances of the pixels to be turned on for each RGB pixel, it is possible to display an image with a different color and a different luminance in accordance with the viewing direction of the observer and reproduce the texture. As in the first exemplary embodiment, it is possible to reproduce the texture display by a stereoscopic image having a depth depending on the pixel position to be turned on. It is also possible to reproduce both the effect of the texture of the ray of which the color and luminance change in accordance with the viewing direction of the observer and the effect of the texture of surface irregularities due to the stereoscopic image. Although display device 40 has been described above as an example, the same effect can be obtained for display devices 30 and 40a.

In the present exemplary embodiment, a size of one pixel of second displays 33 and 43 is smaller than an interval between the plurality of pinholes 321 and 421.

Thereby, it is possible to control the orientation of the emitted ray of the second display by the position of the pixel to be turned on, and to reproduce a display image in which at least one of the wavelength and the luminance of the light is different in accordance with the viewing direction of the observer. Further, a size of one pixel of first displays 31 and 41 is smaller than the interval between the plurality of pinholes 321 and 421 of the pinhole array. That is, a resolution of the first display is made higher than a resolution of the light field display using the second display. Thereby, a high-resolution image can be displayed on the first display, and an image with a directional texture can be reproduced on the second display to supplement the resolution of the light field display. As a result, it is possible to express the display target object with a high accuracy and a realistic texture. The smaller a pixel size of the first display, the higher a resolution of the image quality. Further, the smaller a pixel size of the second display, the larger the number of rays that are emitted through the pinhole in different orientations. Therefore, for example, in a case where the interval from the pinhole is narrowed, it is possible to obtain a wider-view (more obliquely visible) image. Further, in a case where the pixels and the pinholes of the second display are at the same interval, when the size of the pixels is made smaller, a finer texture change can be reproduced. A relationship between the size of one pixel of second displays 33 and 43 in display devices 30 and 40 and the interval between the plurality of pinholes 321 and 421 has been described above. However, the above description is the same for a relationship between the size of one pixel of second display 43a in display device 40a and the arrangement pitch (interval) of the microlenses in microlens array 423.

In the present exemplary embodiment, the display surface of the first display and the light field display using the second display and the pinhole array are superimposed and disposed so as to overlap each other to form a display device. Thereby, the non-directional display image independent of the orientation and displayed on the first display and the directional display image dependent on the orientation and displayed on the second display are superimposed. In such a manner, it is possible to project a display image that expresses the texture displayed by the light field display. Therefore, in addition to the high-definition image on the display surface of the first display, it is possible to recognizably reproduce an image having a different texture depending on the observation direction by the light field display, and it is possible for an observer to visually recognize an image of a highly realistic target object having a fine texture.

### (Third Embodiment)

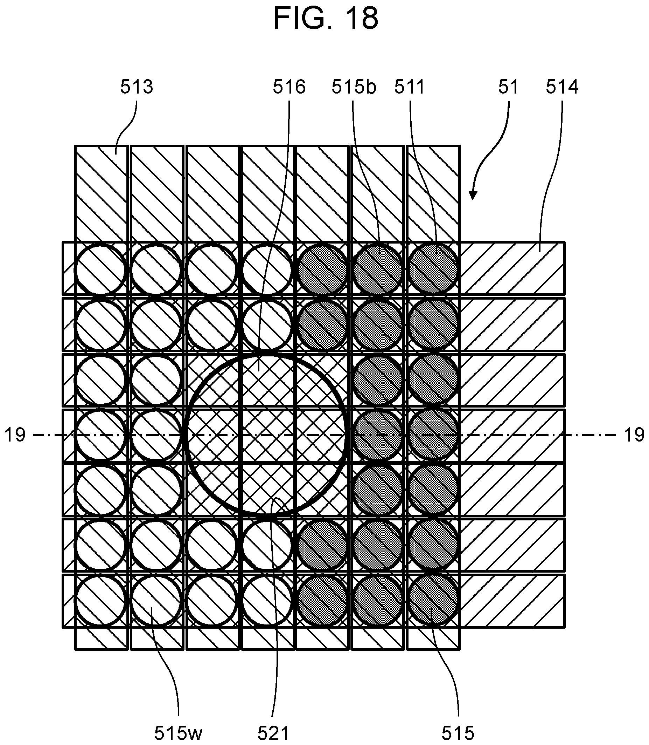

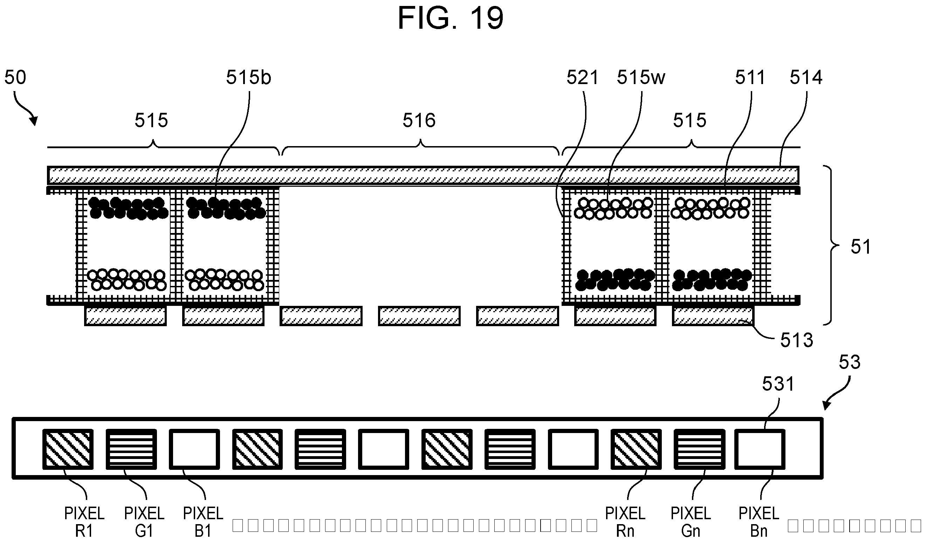

FIG. 18 is a plan view showing a configuration example of a first display of a display device according to a third exemplary embodiment. FIG. 19 is a diagram schematically showing a configuration of disposition of the first display and a second display in the third exemplary embodiment. In first display 51 shown in FIG. 19, a 19-1 cross section of FIG. 18, that is, a cross section of display device 50 in the thickness direction (emitted light direction) is schematically shown.

The third exemplary embodiment shows another specific example of the configuration of the display in the display device. Here, as Configuration Example 2 of the first display, an example using a reflective display device is shown. Hereinafter, components different from the components of the second exemplary embodiment will be mainly described, and repeated description will not be given.

First display 51 (an example of the first display unit) is constituted of a reflective display device such as an electrophoretic electronic paper. As first display 51, a reflective display device such as a microcapsule system, a reflective liquid crystal system, an electrowetting system, or an electrochromic system may be used. In the following, a microcapsule type black-and-white display will be used for simplification, but the above-mentioned description is the same for color display. First display 51 has image display portion 515 that displays white or black on each pixel 511. Image display portion 515 is connected to driving electrodes 513 and 514 of the transparent electrodes provided in the vertical and horizontal two-dimensional pixel arrangement directions, and image display portion 515 of each pixel is driven in accordance with the driving signal. Thereby, white display portion 515w or black display portion 515b is formed. Further, circular or polygonal translucent portion 516 is provided for each predetermined unit of pixels among the plurality of pixels 511, and pinholes 521 by translucent portions 516 are disposed and formed in two dimensions vertically and horizontally at predetermined intervals, thereby constituting the pinhole array (an example of the optical element array).

In second display 53 (an example of the second display unit), a plurality of pixels 531 are disposed in two dimensions vertically and horizontally. In the plurality of pixels 531, RGB pixels are arranged in order, for example, pixels R1, G1, B1, ... Rn, Gn, Bn, .... The pinhole array formed by pinholes 521 formed in first display 51 and second display 53 constitute a light field display. A configuration of disposition of the pinhole array and pixel 531 of second display 53 is the same as configurations of the first exemplary embodiment and the second exemplary embodiment.

Next, an operation of the light field display in the display device of the third exemplary embodiment, that is, the display of an image formed by the light field display will be described.

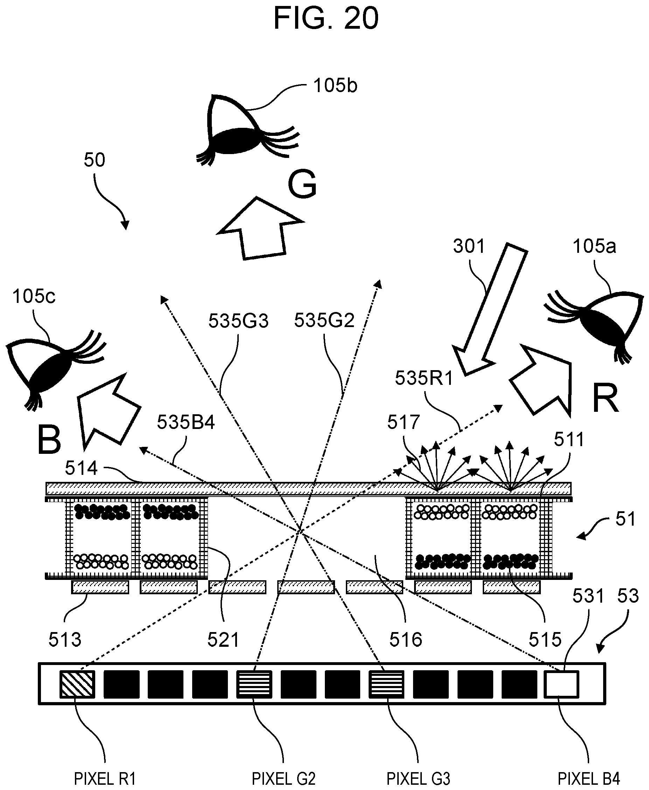

FIG. 20 is a diagram showing an example of texture display in the display device of the third exemplary embodiment.

A plurality of pixels 511 of first display 51 are driven to form white display portion 515w or black display portion 515b. At this time, external light 301 is reflected on the outer surface of first display 51, and scattered light 517 of the external light formed by the electronic paper is emitted to the outside in white display portion 515w. Black display portion 515b absorbs the external light. Thereby, a black-and-white image formed by electronic paper is displayed and is visible to the observer. Further, in the plurality of pixels 531 of second display 53, the emission direction of the luminous flux passing through pinhole 521 is different depending on the position of the turned-on pixel, and the emitted light is emitted in a different direction according to the pixel position.

As shown in FIG. 20, for example, pixel R1 is turned on for red R, pixels G2 and G3 are turned on for green G, and pixel B4 is turned on for blue B. In FIG. 20, hatched or white pixels represent turned-on pixels, and black pixels represent turned-off pixels (non-turned-on pixels). In such a case, emitted luminous flux 535R1 of red pixel R1 passes through pinhole 521 and is emitted in the diagonally upward to the right in FIG. 20. Emitted luminous flux 535G2 of green pixel G2 passes through pinhole 521 and is emitted to the upward right side of FIG. 20, and emitted luminous flux 535G3 of pixel G3 passes through pinhole 521 and is emitted to the upward left side of FIG. 20. Further, emitted luminous flux 535B4 of blue pixel B4 passes through pinhole 521 and is emitted in the diagonally upward direction to the left in FIG. 20.

Therefore, reddish light is observed as viewed from a direction of observer's viewpoint 105a, greenish light is observed as viewed from a direction of observer's viewpoint 105b, and a bluish light is observed as viewed from a direction of observer's viewpoint 105c. In such a case, light of a different color appears to be superimposed on the image formed by the scattered light of the external light formed by the electronic paper of first display 51, depending on the orientation emitted by second display 53. Thereby, an image, which has a texture such as color gloss that changes in accordance with the viewing direction of the observer, is reproduced. Further, in a case where a luminance of the pixel to be turned on is different depending on the pixel position, the luminance of the luminous flux changes depending on the emission direction. In such a manner, by controlling the positions and luminances of the pixels to be turned on for each RGB pixel, it is possible to display an image with a different color and a different luminance in accordance with the viewing direction of the observer and reproduce the texture. As in the first exemplary embodiment, it is possible to reproduce the texture display by a stereoscopic image having a depth depending on the pixel position to be turned on. It is also possible to reproduce both the effect of the texture of the ray of which the color and luminance change in accordance with the viewing direction of the observer and the effect of the texture of surface irregularities due to the stereoscopic image.

In the present exemplary embodiment, as in the second exemplary embodiment, the display surface of the first display and the light field display using the second display and the pinhole array are superimposed and disposed so as to overlap each other to form a display device. Thereby, the non-directional display image displayed on the electronic paper of the first display and the directional display image dependent on the orientation and displayed on the second display are superimposed. In such a manner, it is possible to project a display image that expresses the texture displayed by the light field display. Therefore, an image of a highly realistic target object, in which a texture is added to a high-definition display image of the electronic paper, can be reproduced to be visually recognized by an observer.

As described above, according to the present exemplary embodiment, it is possible to reproduce an image of the target object by adding gloss, reflected light, shadow, color, and stereoscopic effect that are different in accordance with the viewing direction of the observer. In addition, it is possible to reproduce a high-definition image by adding a texture and a stereoscopic effect, and it is possible to reproduce a high-definition and highly realistic content image such that the image can be visually recognized.

As described above, the display devices of the first to third exemplary embodiments each include a first display unit such as a decorative layer or a display which has a non-directional display surface that is invariant regardless of the viewing direction of the observer, and a second display unit which is disposed on the side opposite to the outer surface of the first display unit and displays an image having a different directional property in accordance with the viewing direction of the observer. The second display unit has a display in which a plurality of pixels are two-dimensionally arranged. Further, the display device is disposed between the outer surface of the first display unit and the second display unit in parallel with the light emission surface of the display, and includes an optical element array in which optical elements such as a plurality of pinholes are arranged corresponding to a predetermined unit of pixels. The light field display is constituted of the display and the optical element array. Further, the display device includes a driving unit that drives the display to turn on a predetermined pixel. Thereby, the image provided on the display surface of the first display unit and the image formed by the light field display can be combined such that an image having a texture appropriate for an observer can be reproduced to be visually recognized.

Further, in the display device of the first exemplary embodiment, the first display unit is constituted of a decorative layer having decoration formed on the outer surface as a non-directional display surface. Thereby, in addition to various decorations such as paintings by decorative layers, images such as photographs or printed matter, decorations by unevenness, textures such as cloth, plating, and the like, it is possible to reproduce an image having a texture with a directional property by the second display unit. As a result, it is possible to recognize a texture appropriate for an observer.

Further, in the display device of the first exemplary embodiment, the optical element array is constituted of a pinhole array in which a plurality of pinholes are two-dimensionally arranged at predetermined intervals, and the pinholes are formed by penetrating the outer surface of the first display unit. Thereby, the orientation of the ray emitted through the pinhole array can be controlled in accordance with the position of the pixel turned on by the display of the second display unit, and the ray emitted in a predetermined direction can be reproduced. For example, it is possible to emit a ray in a different direction depending on the color such as RGB, and reproduce an image with a different color in accordance with the viewing direction of the observer.

Further, in the display devices of the second and third exemplary embodiments, the first display unit is configured to have a first display for displaying a non-directional display image, and the second display unit has a second display for turning on the pixels at the predetermined pixel positions among the plurality of pixels. The driving unit has a first display driving circuit which drives the first display and a second display driving circuit which drives the second display. Thereby, the non-directional image formed by the first display and the image having the directional texture formed by the second display can be reproduced in combination, and the observer is able to recognize an appropriate texture.

Further, in the display devices of the second and third exemplary embodiments, translucent portions that transmit light to the outer surface is formed on the first display at predetermined intervals, and the optical element array is constituted of a pinhole array in which the plurality of pinholes using the translucent portions of the first display are two-dimensionally arranged. Thereby, the orientation of the ray emitted through the pinhole array can be controlled in accordance with the position of the pixel turned on by the second display, and the ray emitted in a predetermined direction can be reproduced. For example, it is possible to emit a ray in a different direction depending on the color such as RGB, and reproduce an image with a different color in accordance with the viewing direction of the observer.

Further, in the display devices of the second and third exemplary embodiments, the first display is constituted of a self-emission display device or a reflective display device. Thereby, a high-definition display image with high visibility can be displayed on the first display.

Further, in the display device of the first exemplary embodiment, a size of one pixel of the display of the second display unit is smaller than an interval between the plurality of pinholes in the pinhole array. Thereby, it is possible to control the orientation of the emitted ray of the display by the position of the pixel to be turned on, and to reproduce a display image in which at least one of the wavelength and the luminance of the light is different in accordance with the viewing direction of the observer.

Further, in the display devices of the second and third exemplary embodiments, the size of one pixel of the first display is smaller than the interval between the plurality of pinholes in the pinhole array, and the size of one pixel of the second display is smaller than the interval between plurality of pinholes in the pinhole array. Thereby, it is possible to control the orientation of the emitted ray of the second display by the position of the pixel to be turned on, and to reproduce a display image in which at least one of the wavelength and the luminance of the light is different in accordance with the viewing direction of the observer. Furthermore, it is possible to display a high-definition image on the first display and reproduce an image with a directional texture on the second display to express the display target object with a precise and realistic texture.

Further, in the display devices of the first to third exemplary embodiments, the display of the second display unit turns on a pixel at a predetermined pixel position among the plurality of pixels and controls the orientation of the ray emitted through the optical element array, thereby reproducing a display image in which at least one of the wavelength and luminance of light is different in accordance with the viewing direction of the observer. Thereby, it is possible to reproduce an image having a different color and a different luminance in accordance with the viewing direction of the observer. By forming an image having a texture close to that of a real thing imitating a target object, it is possible to make the observer visually recognize the image.

Further, in the display devices of the first to third exemplary embodiments, the display of the second display unit reproduces a display image visually recognized in the position of the outer surface of the first display unit or in the space closer to an observer side than the outer surface from the viewpoint of the observer. Thereby, it is possible to display an image having a texture such as gloss on the outer surface of the first display unit, or to reproduce an image having unevenness so as to protrude in front of the first display unit. As a result, it is possible to realize an image in which an observer is able to recognize an appropriate texture.

Further, in the display devices of the first to third exemplary embodiments, the display of the second display unit reproduces a stereoscopic image as the display image. Thereby, an observer is able to visually recognize a stereoscopic image with a high sense of presence, and the expressive power of the display image by the display device can be improved.

Although various exemplary embodiments have been described above with reference to the drawings, it is needless to say that the present invention is not limited to such examples. It is apparent to a person skilled in the art that various modification examples or variations can be made within the scope of the claims, and it should be understood that such modifications and variations also belong to the technical scope of the present invention. Further, components in the above-mentioned exemplary embodiment may be arbitrarily combined without departing from the spirit of the invention.

### INDUSTRIAL APPLICABILITY

The present disclosure is useful as a display device or the like capable of recognizably reproducing an image having an appropriate texture by an observer by combining an image provided on a display surface and an image formed by a light field display.

### REFERENCE MARKS IN THE DRAWINGS

10, 30, 40, 40a, 50: display device
11: decorative layer
12: pinhole film
13: display
15, 35: light field display
31, 41, 41a, 51: first display
33, 43, 53: second display
60: display driving circuit
61: first display driving circuit
63: second display driving circuit
90: control device
91: light source direction arithmetic circuit
92: display object data storage unit
93: ray tracing arithmetic circuit
94: common image discrimination arithmetic circuit
95: non-directional image drawing arithmetic circuit
96: directional image drawing arithmetic circuit
105, 105a, 105b, 105c: viewpoint
121, 321, 421, 521: pinhole
122, 322: pinhole array
131, 411, 431, 511, 531: pixel
210: light source direction wavelength characteristic identification device
301: external light
412: light emitting element portion
415: light blocking portion
416, 516: translucent portion
423: microlens array
515: image display portion
515b: black display portion
515w: white display portion

## Claims

1. A display device comprising:
a first display unit that displays a non-directional display image which is invariant regardless of a viewing direction of an observer;
a second display unit that is disposed on a side opposite to an outer surface of the first display unit and has a plurality of pixels two-dimensionally arranged to display a display image having a different directional property in accordance with the viewing direction of the observer;
an optical element array that is disposed in parallel with a light emission surface of the second display unit between the outer surface of the first display unit and the second display unit, in which a plurality of optical elements are arranged respectively corresponding to a predetermined unit of pixels among the plurality of pixels; and
a driving unit that turns on a predetermined pixel among the plurality of pixels of the second display unit.

2. The display device according to Claim 1, wherein the first display unit is constituted of a decorative layer having decoration formed on the outer surface.

3. The display device according to Claim 1 or 2, wherein the optical element array is constituted of a pinhole array in which a plurality of pinholes are two-dimensionally arranged at predetermined intervals, and
the plurality of pinholes are formed to penetrate the outer surface of the first display unit.

4. The display device according to Claim 1, wherein the first display unit has a first display which displays the non-directional display image,
the second display unit has a second display having the plurality of pixels, and
the driving unit has a first display driving circuit which drives the first display and a second display driving circuit which drives the second display.

5. The display device according to Claim 4, wherein a plurality of translucent portions, which transmit light to the outer surface, are formed at predetermined intervals on the first display, and
the optical element array is constituted of a pinhole array in which the plurality of translucent portions are two-dimensionally arranged as a plurality of pinholes.

6. The display device according to Claim 4 or 5, wherein the first display is constituted of a self-emission display device or a reflective display device.

7. The display device according to Claim 3, wherein a size of each of the plurality of pixels of the second display unit is smaller than an interval between the plurality of pinholes in the pinhole array.

8. The display device according to Claim 5, wherein a size of each pixel of the first display is smaller than the predetermined interval of the pinhole array, and
a size of each of the plurality of pixels of the second display is smaller than the predetermined interval of the pinhole array.

9. The display device according to any one of Claims 1 to 8, wherein the driving unit turns on a predetermined pixel among the plurality of pixels of the second display unit to control an orientation of a ray emitted through the optical element array, and displays the display image of which at least one of a wavelength or a luminance of light is different in accordance with the viewing direction of the observer.

10. The display device according to any one of Claims 1 to 9, wherein the driving unit causes the second display unit to display the display image which is visually recognized at a position of the outer surface of the first display unit or in a space closer to a side of the observer than the outer surface from a viewpoint of the observer.

11. The display device according to Claim 9 or 10, wherein the display image displayed by the second display unit is a stereoscopic image.
